Europäisches Patentamt

European Patent Office

Office européen des brevets

(11) Publication number: **0 408 391 A2**

# EUROPEAN PATENT APPLICATION

(21) Application number: 90307711.3

(22) Date of filing: 13.07.90

(51) Int. Cl.⁵: **G06F 15/16**

The title of the invention has been amended (Guidelines for Examination in the EPO, A-III, 7.3).

(30) Priority: 14.07.89 JP 180356/89

(43) Date of publication of application:
**16.01.91 Bulletin 91/03**

(84) Designated Contracting States:
**DE GB**

(71) Applicant: **HITACHI, LTD.**
**6, Kanda Surugadai 4-chome**
**Chiyoda-ku, Tokyo 101(JP)**

(72) Inventor: **Matsumoto, Hidekazu**
**22 -5, Daihara-cho 2-chome**
**Hitachi-shi, Ibaraki 316(JP)**
Inventor: **Tanifuji, Shinya**
**20-1 Daihara-cho 2-chome**
**Hitachi-shi, Ibaraki 316(JP)**
Inventor: **Orita, Miyahiko**

**17-1 Moriyama-cho 3-chome**
**Hitachi-shi, Ibaraki 316(JP)**
Inventor: **Takahashi, Satoko**
**17-1-403 Moriyama-cho 3-chome**
**Hitachi-shi, Ibaraki 316(JP)**
Inventor: **Kawakami, Junzo**
**449-61 Miwa 1-chome**
**Mito-shi, Ibaraki 310(JP)**
Inventor: **Takei, Kazuo**
**35-7 Minamidai, Toukai-mura**
**Naka-gun, Ibaraki 319-11(JP)**
Inventor: **Morioka, Takayuki**
**16-4 Higashiooshima 3-chome**
**Katsuta-shi, Ibaraki 312(JP)**
Inventor: **Miyagaki, Hisanori**
**3234-4 Uchibori-cho**
**Hitachioota-shi, Ibaraki 313(JP)**

(74) Representative: **Calderbank, Thomas Roger et al**
**MEWBURN ELLIS 2 Cursitor Street**
**London EC4A 1BQ(GB)**

(54) Computer system having network interconnected workstations.

(57) A computer system has a plurality of workstations (10,20,30) interconnected by a network (40). Each workstation (10,20,30) has at least one server program (415,510,520,530) which processes user events input to the workstation (10,20,30) from suitable input means (210,220,230) and also controls the display (200,201,202) of the workstation (10,20,30). One or more of the workstations also contains a client program (430,600). The server program (415,510,520,530) of each workstation (10,20,30) transmits processed user events to the client program (430,600) which then processes them. The client program (430,600) may then control some (more than one) or all of the workstations (10,20,30) on the basis of user inputs to any one of the workstations (10,20,30). Thus, for example, the client program may be arranged to generate corresponding windows on the display (200,201,202) of each workstation (10,20,30), so that any of the workstations (10,20,30) may control the display (200,201,202). A priority order among users may be used to resolve conflicting instructions. In this way, a greater efficiency of use of shared resources can be achieved. Of course the sytem may also be operated with a one-to-one connection of a server program (415,510,520,530) and a client program (430,600).

EP 0 408 391 A2

# Fig.3

# COMPUTER SYSTEM AND METHOD OF OPERATING SUCH A SYSTEM

The present invention relates to a computer system having a plurality of workstations, to a method of operating such a computer system, to an image display system incorporating such a computer system, and to an industrial plant incorporating such a display system.

It is now common for computer systems to be formed by a plurality of workstations interlinked by a network. Data, such as graphics data, can then be shared and transmitted between the workstations, so that a user at one workstation has access not only to the data stored in that workstation, but also to data stored in another workstation. Such a system is efficient, but an important factor is then the configuration of the system which permits satisfactory access to the system by the users, and an efficient sharing of the resources of the system.

It is known to provide a distributed processing computer system, in which a file is shared among a plurality of users, with the system having a common Central Processing Unit (CPU) connected to the network for controlling the access to the system by each workstation. There are several such systems, e.g. such as that disclosed in the article entitled "Distributed File System" by Jun Murai in BIT, Vol. 119, No. 6, pages 266-273.

Recently, a system known as the X-windows system has been developed. Such a system is disclosed in the article entitled "General-Purpose Windows System Being Spread in Unix Work Station" in Nikkei Electronics (No. 417) of 23 March 1987, pages 127-138, and in the Xlib Programming Manual for Version 11, by Adrian Nye, published by O'Reilly and Associates, Inc. in August 1988.

In the X-windows system, a plurality of workstations are interconnected via a network, with each workstation having a display, input means to permit a user to input suitable input events, and a processor containing two different types of programs. The first type of program is known as a "client program", which represents a specific application (operation). There may be several such client programs in each workstation. The second type of program is known as a "server program". The server program acts as an intermediary between the client programs and the functions of the workstation. Most importantly, the server program controls the display of the corresponding workstation, and also processes the user information input to that workstation.

The important feature of the X-windows system is that the server may act as an intermediary for either the client program contained in its own workstation or as an intermediary for a client program in another workstation. Thus, a user at the workstation may access, via the server program of that workstation, a client program in any of the workstations, and that client program then controls the display of the user's workstation via the server program.

The server program transmits messages to the client program(s) via the network, and receives network messages from the client program(s) and interprets those messages to control the display. The server program may maintain complex data resources, such as windows, cursors, fonts etc., which can be shared between different client programs. The fact that the server program maintains such resources has the effect of reducing the amount of data that has to be maintained by each client program, and so the amount of data that has to be transferred over the network is reduced. In the known X-window system, a client program is available to only one server program at any time.

Other systems involving interconnection of a plurality of workstations are described in US-A-4414621 and JP-B-6253084, and the disclosure of these documents will be discussed in more detail later.

The present invention seeks to expand the operation of the X-windows system, by permitting it to have not only a "local" mode in which a client program is connected to one server program (as in the known X-windows system), but also to have a "global" mode in which a client program has access to a plurality of server programs. It should be noted that although the present invention originated as a development of the X-windows system, the present invention is not limited to systems having all the features of the existing X-windows system.

At its most general, the present invention proposes that the server program of each workstation is arranged to transmit processed user events to one or more client programs via the network, and that one or more client program is operatively connected to the server program of at least some (i.e. more than one) of the workstations for controlling the server program of those workstations on the basis of user events input to the input means of at least one of the workstations. Thus, when an input is input to one workstation, it may be used to control the displays of some or all of the other workstations.

The or each client program may be contained in a separate processor. However, normally the client program(s) will be contained in one or more of the workstations. In this case, although the client program and the server program may be considered to be due to the action of separate processors, they may in fact be carried out on common processing means. This inclusion of the client program(s) in one or more of the workstations is a feature also to be found in the X-windows system. However, it is not necessary that every workstation has a client program, since the present invention permits a client program in e.g. one workstation to act one some or all of the workstations, and thus is it possible for one or more of the workstations to contain only a server program.

On the other hand, it is extremely important that each workstation contains a server program, since it is the server program which acts as a link between the workstation and the network, for the transmission of user input to the network and for the reception of messages which are used to control the display. Of course, when the server program is linking to a client program in its own workstation, then that link must itself be considered part of the network of the system. If a server program was not present in each workstation, then the advantage of the X-windows system would be lost, in that either more data would have to be passed through the network such as in the known systems mentioned earlier where there is a common CPU, or much more processing would have to occur at each workstation. I t is this latter case which is the disadvantage of the system disclosed in US-A-4414621. In that disclosure, each program may be considered to have two parts, but this division is not the same as the division into a 'client program' and a 'server program' in the present invention. In US-A-4414621, user inputs to a workstation are transmitted with only the minimum of processing to the network, are received by the program of one or more of the workstations, and are processed by it. Then, the program of that workstation controls its own display. Thus, in US-A-4414621, the program does not control the displays of a plurality of the workstations. Hence, unlike the present invention, US-A-4414621 requires that a user input be fully processed (i.e. the equivalent of both "server" and "client" stages) by all the workstations on which that input is to act.

Of course, a system incorporating the present invention need not act in the way discussed above at all times. It is possible for the system to operate in the "local" mode in which a client program is linked only to one workstation at any time. This, however, corresponds to the system of the X-windows system discussed earlier. When necessary, however, the present invention goes further than this and has the global mode which is the characteristic feature of the invention.

Consider now such a system operating in a global mode, with a client program being linked to several different workstations via the server program of that workstation. The same, or a similar display is then generated at each workstation. Each workstation may then have a cursor, and the cursor of each workstation may then be displayed on all the workstations. The function of a cursor, however, is to act, together with a user input, to generate a suitable control signal. Since each workstation has access to the same client program, it is thus, in theory, possible for conflicting control signals to be transmitted to the same client program from different workstations. Therefore, some sort of priority arrangement is needed to resolve conflicts between workstations, and there are a number of possibilities for achieving this. Firstly, priority may be based simply on time, with earlier control signals being processed first. However, it is also possible to indicate a priority level between workstations, with some workstations being considered at a "high" priority and others at a "low" priority, so that control signals from high priority workstations are processed before those from low priority stations.

This idea may be developed further, in an arrangement which is particularly suitable for control of an industrial plant. In such a plant, some workstations may be those of plant managers, who should have wide freedom to influence the parameters of the plant. Other workstations, however, may be those of less senior users. In this case, control signals from the workstations of plant managers may be given a priority such that the client program will act on any such input, whereas users with low priority may have some of their input signals acted on, and others ignored.

It can also be seen that the fact that each display may be displaying a plurality of cursors is something which visually distinguishes the present invention from the known X-windows system. A system which was not based on the X-windows system, but which involved the display of multiple cursors, was disclosed in JP-A-62-53084 referred to earlier. However, in that system, all cursors were necessarily displayed at all times. As discussed above, the present invention has a global mode in which all cursors are displayed, but may also have a local mode in which only the cursor of that workstation is displayed.

Embodiments of the present invention will now be described in detail, by way of example, with reference to the accompanying drawings in which:

Fig. 1 is a block diagram showing the interconnection of workstations by a network;

Fig. 2 shows schematically the structure of a workstation which may be used in conjunction with the present invention;

Fig. 3 illustrates the operation of the known X-windows system;

Fig. 4 shows schematically the operation of a first embodiment of the present invention;

Fig. 5 is a flow chart showing the execution of a program corresponding to the operations of a user;

Figs. 6a to 6d illustrate displays which may be produced with the first embodiment of the present invention;

Figs. 7 and 8 are block diagrams showing processing operations which may be carried out in the first embodiment of the present invention;

Fig. 9 is a flow chart showing the transmission of responses between a user and the system;

Fig. 10 shows a second embodiment of the present invention, in which identical windows are generated in a plurality of workstations;

Fig. 11 shows a third embodiment of the present invention;

Fig. 12 shows a possessory right display window which may be used with the third embodiment of the present invention shown in Figure 11;

Fig. 13 shows a plant control system, being a fourth embodiment of the present invention;

Fig. 14a to 14c and Figs. 15a to 15c show examples of display frames which may be displayed in displays of the system of Fig. 13;

Fig. 16 shows another window which may be displayed in the system of Fig. 13; and

Fig. 17 shows a further type of window for a plant control system.

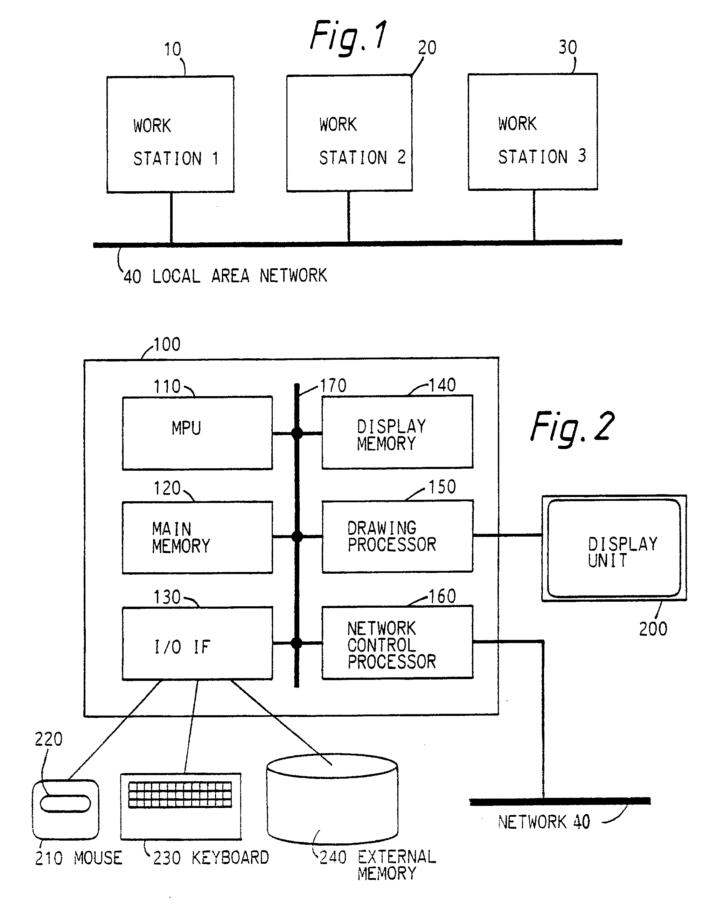

A first embodiment of the present invention will now be described with reference to Figs. 1 to 9.

Fig. 1 shows one embodiment of the present invention in which a plurality of workstations WS1-(10), WS2(20) and WS3(30) are connected through a local area network 40. This local area network 40 may be e.g. a network conforming to the IEEE802.3 standards, but other networks may be used in the present invention. For example, not only a local area network but also a global area network can be used. The workstations WS1(10), WS2(20) and WS3(30) may have the same structure but may have different structures, provided that they still conform to the present invention.

Fig. 2 is a block diagram showing the hardware structure of the workstation WS1(10). This workstation WS1(10) has a processor board 100, a display unit 200, a mouse 210, a keyboard 230 and an external memory 240.

The processor board includes a microprocessor (MPU) 110 for executing a program, a main memory 120 for storing a program and data, an input/output interface circuit (I/OIF) for controlling the inputs/outputs with the keyboard 230 and the mouse 210, a network control processor 160, a drawing processor 150, and a display memory 140. These processors and memories are coupled via a system bus 170. The I/OIF 130 is connected to control the mouse 210, the keyboard 230 and the disc unit 240. The network control processor 160 is connected to the local area network 40 and communicates with other workstations. The mouse 210 is equipped with one or more buttons 220.

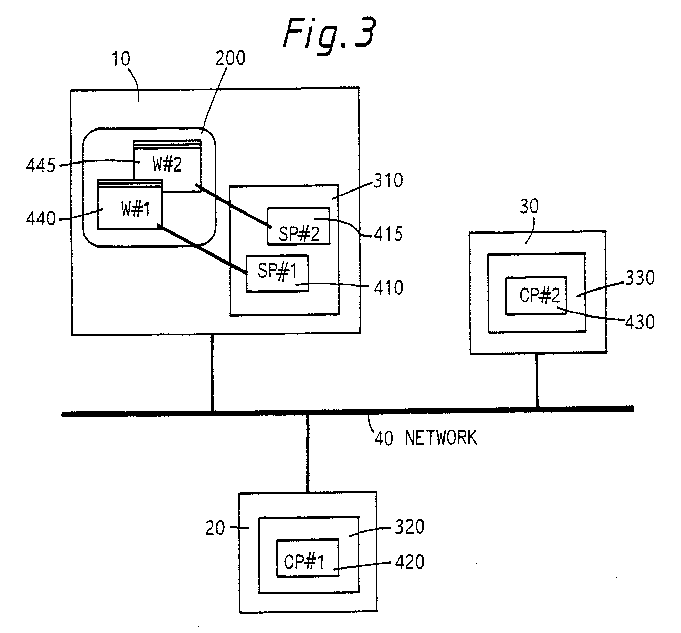

The structure described above may, as will subsequently be described, be arranged to operate according to the present invention. However, the operation of the known X-windows system will first be described with reference to Fig. 3.

Fig. 3 is a diagram showing an example of the execution of a program making use of the server/client mode. The program is separately executed by server processes 410 and 415 for controlling the display unit 200 and client processes 420 and 430 are execution. This method of executing the program by separating the server process and the client process is practiced in the X-windows system, for example.

In Fig. 3, the user operates the workstation WS1(10) so that the server processes SP#1(410) and SP#2(415) are operated on the workstation WS1(10) for windows W#1(440) and W#2(445). The client process CP#1(420) for the server process SP#1(410) is executed on the workstation WS2(20). Moreover, the client process CP#2(430) for the server process SP#2(415) is executed on the workstation WS3(30). The server processes and the client processes communicate through the local area network 40 to interchange data.

It is important to appreciate that in the known X- windows system, the client processes CP#1-(420) and CP#2(430) may be executed in conjunction with the server process of one workstation only.

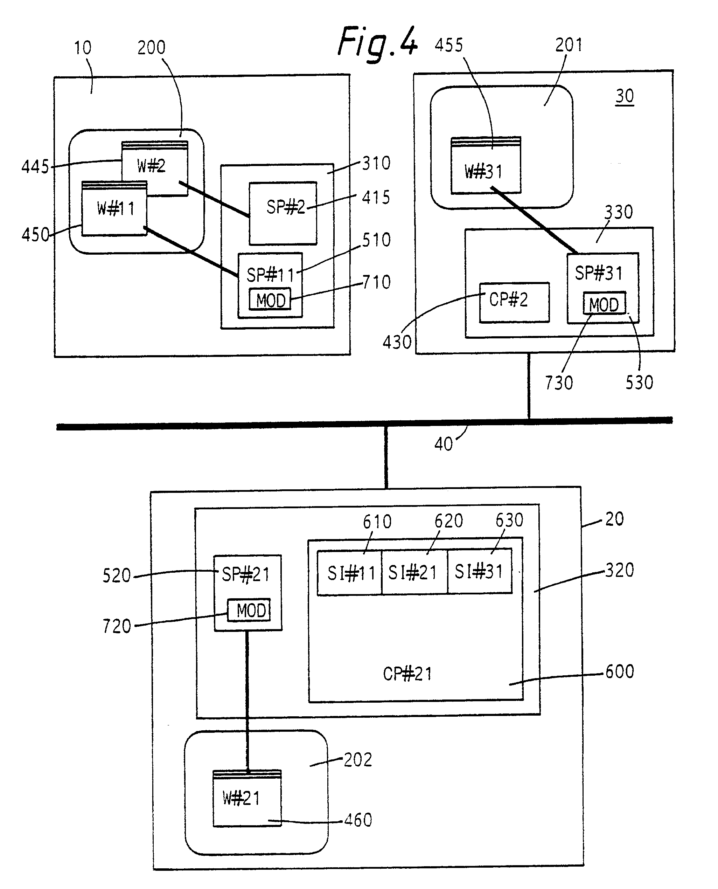

In the present invention, however, multiple access is available and will now be described with reference to Fig. 4.

Fig. 4 is a diagram showing the server processes and the client processes according to the first embodiment of the present invention when a plurality of users share the data. Since one client process is shared by a plurality of server processes, it can be ensured that one process accesses the database.

In Fig. 4 the window W#11(45) of the workstation 10, the window W#21(460) of the workstation 20 and the window W#31(455) of the workstation 30 share a client process CP#21(600), respectively, through server processes SP#11(510), SP#21(520) and SP#31(530).

The client process CP#21(600) has server interfaces SI#11(610), SI#21(620) and SI#31(630), for the individual server processes, through which server processes it communicates with the individual server processes. In the X-window system, the movement of the mouse is processed within the server processes because there is no need for the client processes to become involved with such user input so that there is no communication at this step with the client processes. However, in the present invention the communications cannot be confined within the server processes so that the operations of the mouse may communicate with another workstation.

In the present embodiment, it is possible to provide a switch between more than one mode (i.e. there may be a global mode in which each movement of the mouse is transmitted to the client process, and a local mode in which the movement is transmitted to the client process only in the presence of an instruction). The modes, e.g. the local mode and the global mode, are set in mode flags (710, 720 and 730) which are provided in the respective server processes.

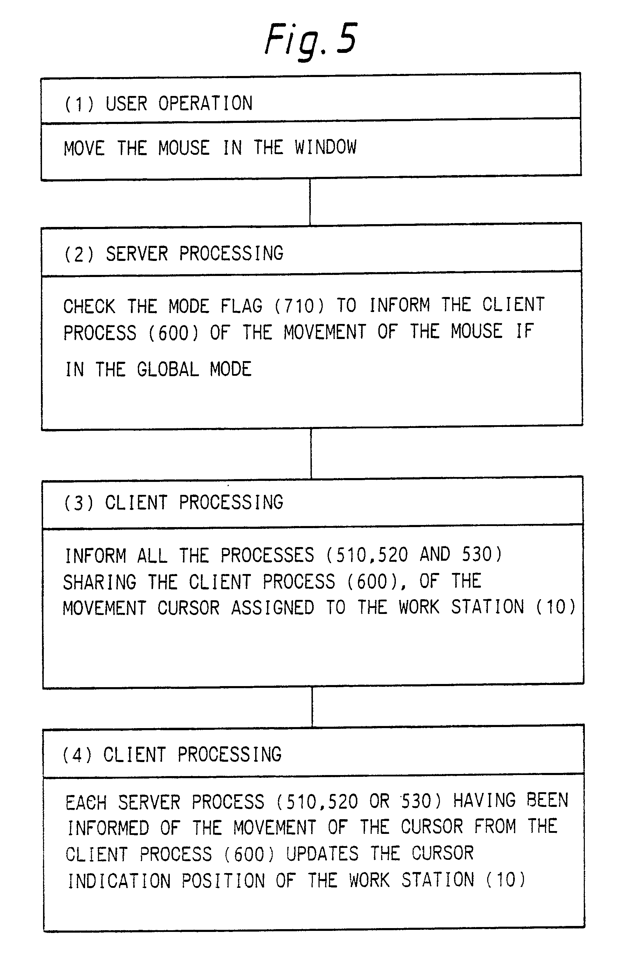

Next, the operations needed for the user to move the mouse 210 in the structure of Fig. 4 will be described with reference to Fig. 5. The following description is directed to operation in the global mode. [1] the user moves the mouse 210 in the window W#11(450) on the workstation WS1(10).

[2] The server process 510 of the window W#11-(450) operating on the workstation WS1(10) detects the movement. The server process 510 checks the mode flag 710 and informs the client process 600 of the movement of the mouse, if in the global mode, through the server interface 610.

[3] The client process 600 receives and transmits that data corresponding to the movement of a cursor to all the server processes, which share the client process 600, through the server interfaces 610, 620 and 630.

[4] In response to the cursor movement, the individual server processes 510, 520 and 530 update the indication position of that one of the cursors in the windows W#11(450), W#21(460) and W#31-(455), which corresponds to the user of the WS1-(10).

Next, the operation of the local mode in which the cursor movement is transmitted to the client processes only in response to an instruction will be described. An updating of the cursor positions in all the workstations upon each time of the movement of a cursor would increase the processing overhead therefor. This interferes with the display. Therefore, a mode is established in which the updating is accomplished only when the cursor position is to be changed. For this mode, and for the workstation WS1(10) having its cursor moved by the use of the mouse 210, the mouse movement is transmitted to the server process 510. The server process 510 checks the mode flag 710 to move the cursor of its own display, if in the local mode. Since, however, the cursors on the display of other workstations need not be moved, the movement of the mouse 210 is not transmitted to the client process 600. As a result, the cursor movement is not transmitted to any of the other workstations.

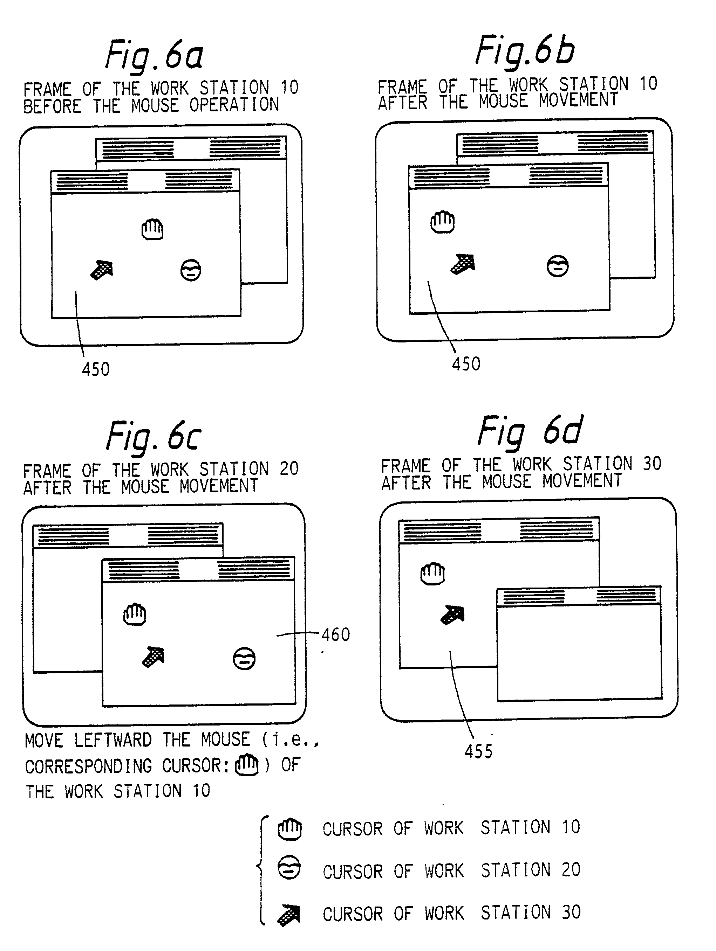

Fig. 6a to 6d show the appearance of the cursors on the display accompanying the mouse movement when the client process is shared between three workstations. Fig. 6a shows an initial state of one workstation 10 in which, the cursor of the workstation 10 has the shape of a hand, that the cursor of the workstation 20 has the shape of a face, and that the cursor of the workstation 30 has the shape of an arrow.

If the mouse is moved in the shared window 450 on the workstation 10, to the position shown in Fig. 6b, information about its movement is transmitted to the client process 600 through the server process 510. Then, the server processes 450, 455 and 460 are notified of the movement of the cursor of workstation 10 i.e. the cursor in the shape of a hand. In accordance with this notification from the client process 600, the individual server processes move the hand-shaped cursor in the windows 450, 455 and 460 as shown in Figs. 6a to 6d.

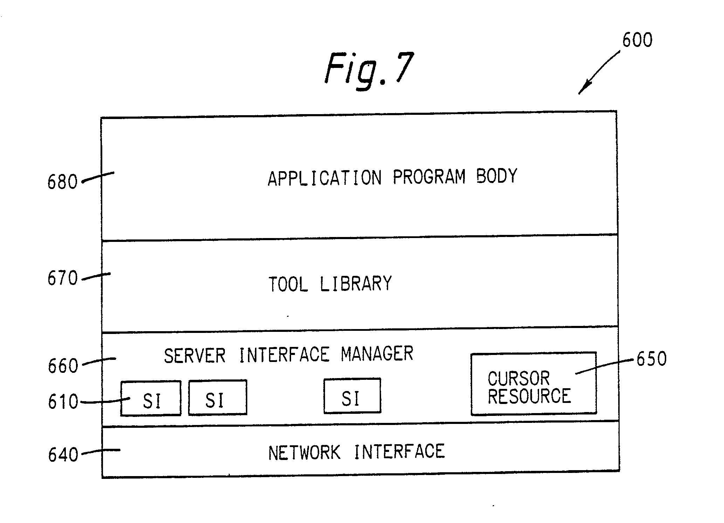

Fig. 7 is a conceptional diagram showing the structure of the client process 600 sharing a plurality of server processes. A network interface 640 communicates with the server processes through the network. Each time the server process is connected to the client process 600, a server interface S1610 is established, via which a server interface manager 660 is connected to the server processes.

The server interface manager 660 has a cursor resource 650 in which is stored a plurality of cursor shapes. The user may thus select and use an arbitrary one of the cursor shapes which are registered in the cursor resource.

A tool/library 670 provides tools or libraries for enabling an application program body 680 to communicate with the server processes.

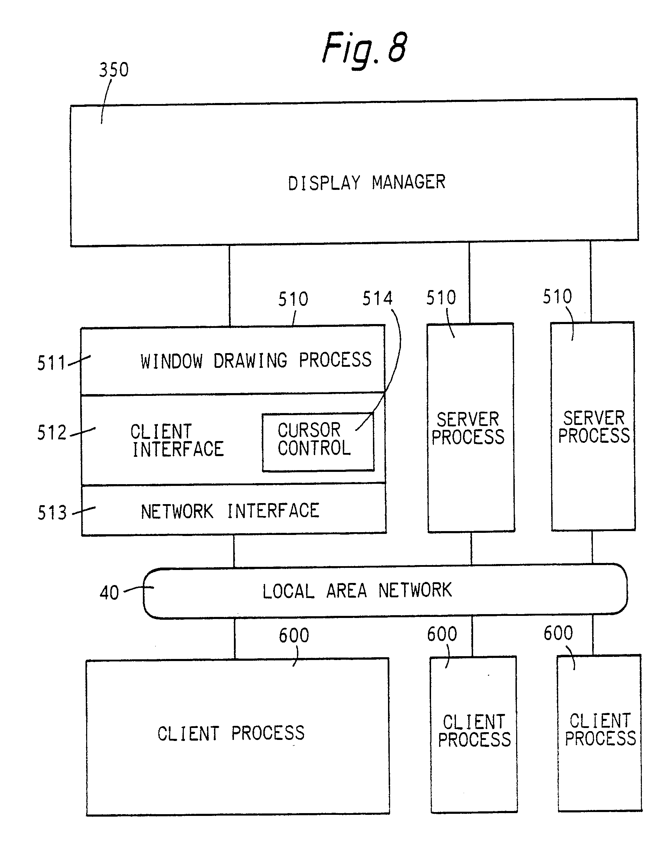

Fig. 8 is a conceptional diagram showing the structure of the server process 510 sharing the client processes 600. A network interface 513 is a mechanism for providing communications with the client process through the network, and a client interface 512 permits communication with the client process.

The client interface 512 includes a cursor control unit for controlling the operations of the cursor of the server process itself. The cursor control unit 514 has mode flags to control the global mode and the local mode discussed above.

The window drawing processing is a function to display the data sent from the client process in the display unit. In this display unit, there are displayed a plurality of windows, which are managed by a display manager 350. The server process 510 issues demands to the display manager, e.g. demands for raising an arbitrary window to the uppermost position or to a lower position. In response to these demands, the display manager 350 manages the vertical relationship between the windows.

The display manager 350 controls the cursor movement according to the mouse movement between the global windows sharing the data and the remaining local windows. The global windows sharing the data are displayed by the server process connected to the client process having a plurality of sets of server processes.

When the cursor is within the global window, it is not usual that the cursor moves outside that global window. When the cursor is removed from the global window, a special operation is required, depressing a specific control key, for example).

When the cursor is outside the global window, it can be moved to an arbitrary outside position. In order to move the cursor into the global window, however, again a special operation is required (depressing a specific control key, for example).

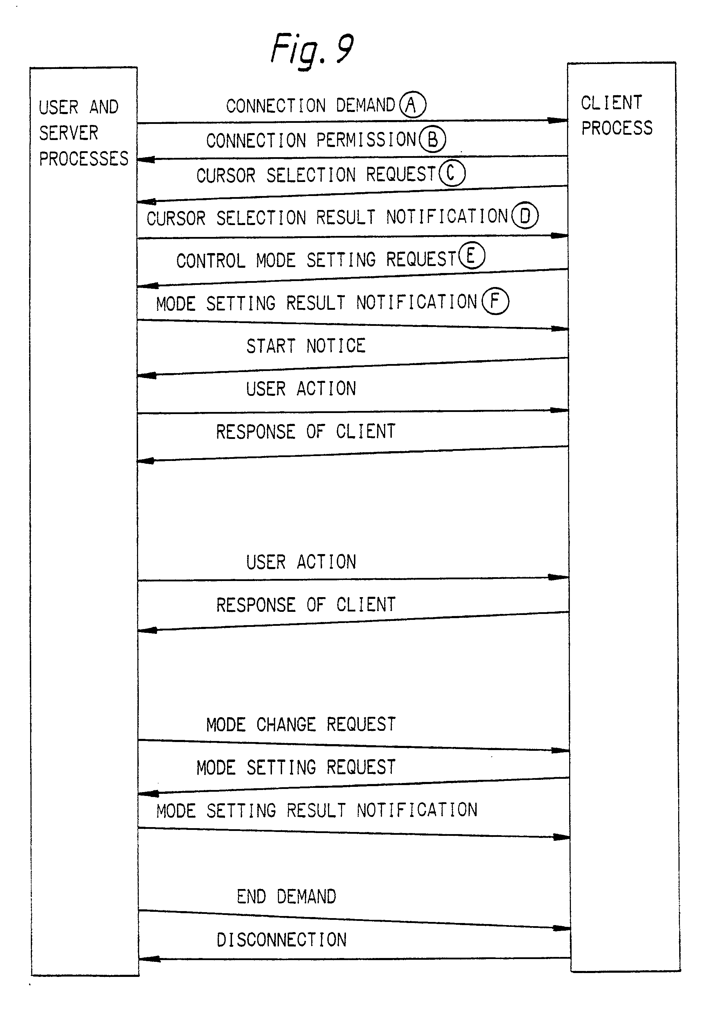

Fig. 9 is a diagram showing one example of the flow of the contents of the communications between the user and the client process.

The user demands at step A a connection through the plurality of server processes for the client process capable of handling the server processes. When this client process has already been established, a connection permission is transmitted at step B to the user who issued the demand via the server processes. If the client process that has been demanded is not yet established, a new client process is established to notify the user who issued the demand of the connection permission. Next, the client process requests the user to select a cursor shape at step C. The user selects an arbitrary cursor shape and notifies this to the client process at step D. Next, this client process requests the user to set the control mode at step E. The user sets the control mode and notifies the client process at step F. In response to this notice, communications are then accomplished between the user and the client process to execute the program.

These program executions are effected by transmitting the actions caused by the user to the aforementioned client process, by causing the client process to accomplish the processing corresponding to these actions and by repeating the response. When the control mode is to be changed during the program execution, a mode changing request is sent to the client process and is received to notify the client process of change in the mode setting result.

When the user ends the execution of the process, an end demand is sent from the user to the client process. In response to this demand, the client process separates the server process of the user having issued the demand.

According to the first embodiment of the present invention described above, a plurality of users can instruct a common display data simultaneously with their individual cursors.

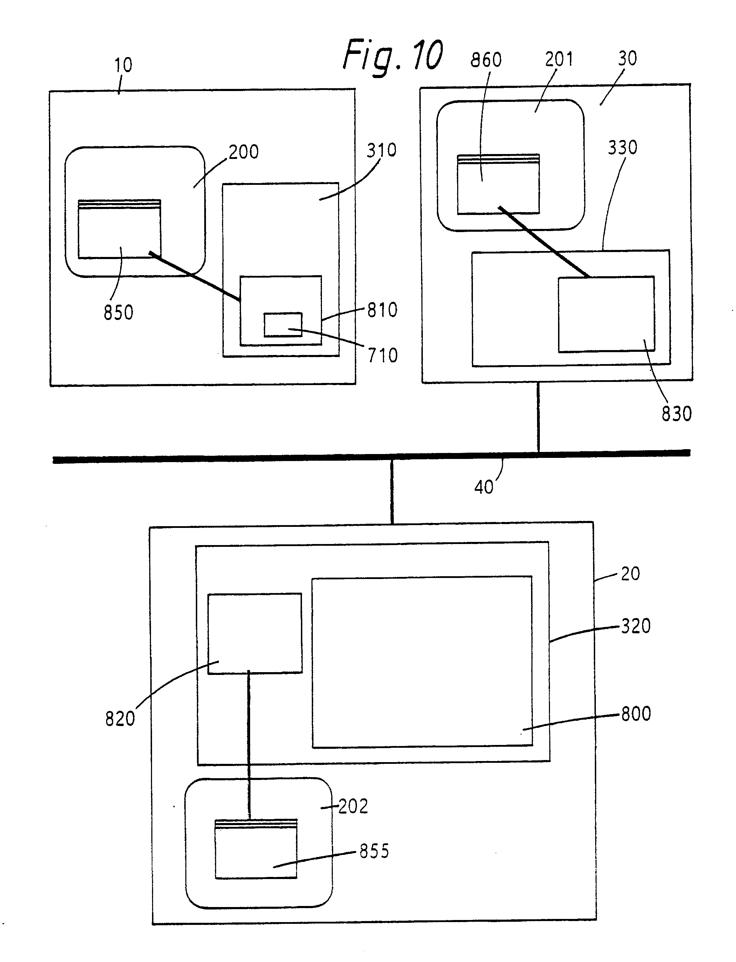

Next, a second embodiment of the present invention will be described with reference to Fig. 10.

A window 850 in the display unit 200 of the workstation 10 has its contents also displayed in windows 855 and 860 in display units 201 and 202 of other workstations 20 and 30. Thus, the windows 855 and 860 act as the copy windows of the window 850 to display absolutely the same contents as that of the window 850 at all times.

A master server process 810 is a server process for displaying via the window 850 and execute the program in association with a client process 800. When the user of one workstation issues a demand for displaying its window in another workstation, a sub-server process is established in that other workstation, and a copy window is established so that the common content is displayed at a plurality of workstations.

If, in the arrangement of Fig. 10, the user of the workstation 10 issues a demand for displaying the window 850 in the remaining workstations 20 and 30, the master server process 810 demands the client process 800 for establishing a copy window. In response to this demand, the client process 800 establishes sub-server processes 820 and 830 in the workstations 20 and 30. These sub-server processes 820 and 830 establish the windows 855 and 860 in the workstations 20 and 30 so as to display the same contents as that of the window 850. The updating of the windows 855 and 860 is synchronized with that of the window 850. These synchronous updatings are accomplished by instructing client process 800 to update the sub-server processes 820 and 830 at the time of the updating of the window 850. The sub-server processes cannot be inputted by the user because they have no other function than display.

According to the second embodiment of the present invention, the same display, i.e. the window can easily be displayed on another workstation by the client process.

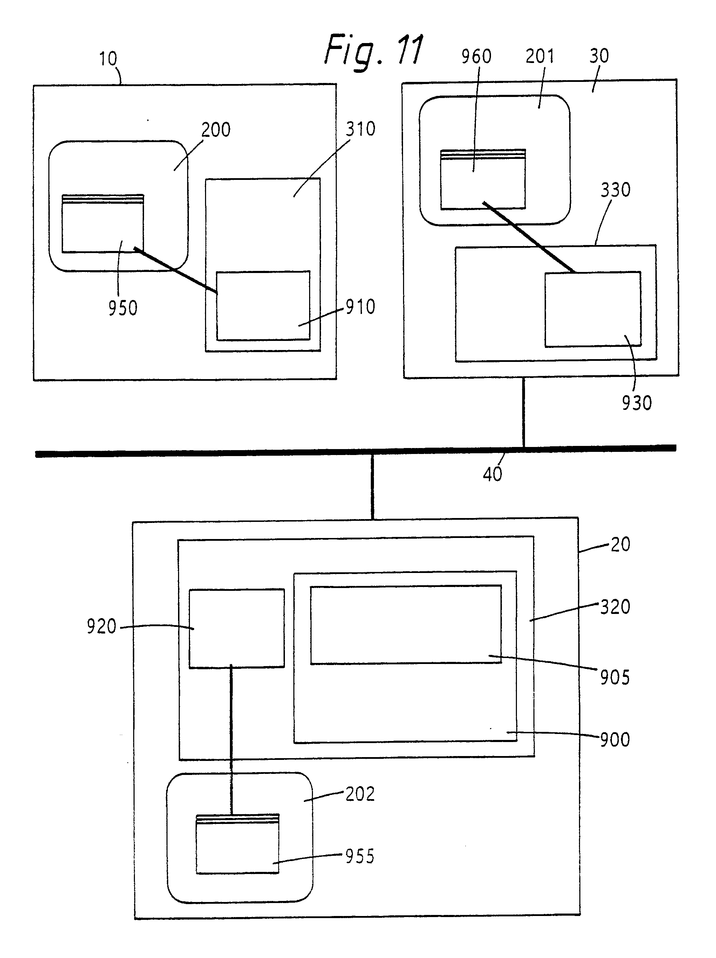

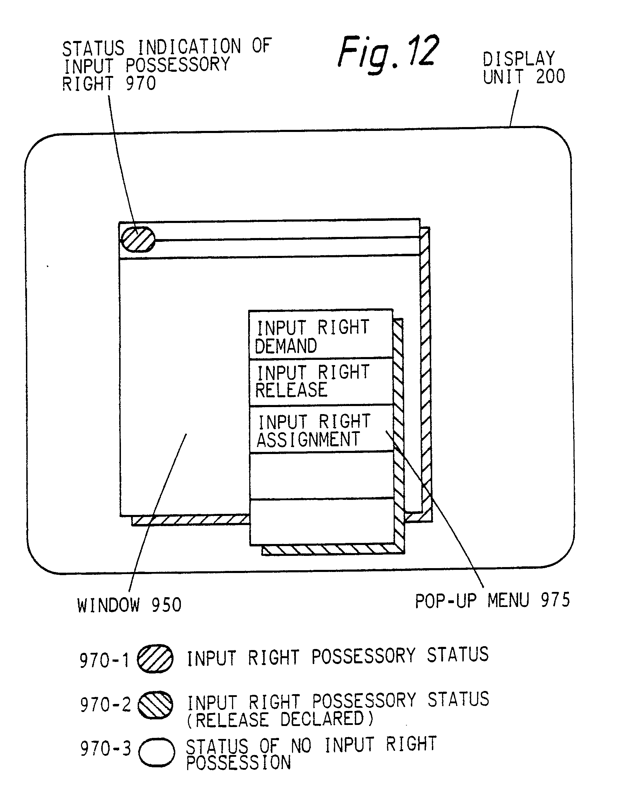

A third embodiment of the present invention will now be described with reference to Figs. 11 and 12.

In one embodiment shown in Fig. 11, there is a system in which common data are equivalently operated among a plurality of windows. In the third embodiment one client process is shared among the server processes of the plurality of workstations. Despite this, however, the operation of the data in the window simultaneously is limited to one server process coming from one window.

Windows 950, 955 and 960 in the display units 200, 201 and 202 of the workstations 10, 20 and 30 are connected to a common client process 90, respectively, through server processes 910, 920 and 930 to display a common display. The client process is given an input possessory right control unit 905. This input possessory right control unit 905 switches the plurality of server processes connected therewith so that they receive the input of one server process.

Next, the method of acquiring the input right will be described with reference to Fig. 12. A server process having no input right requests the input right from the input possessory right control unit 905 so that it is permitted to receive an input. In order that the user may request the input right, a command for requesting the input right is issued by opening a pop-up menu 975 in the window 950 and by selecting the menu of the input right request. The command for requesting the input right is transmitted from the server process 910 to the input right possessory control unit 905 in the client process 900. The input right possessory control unit 905 gives the input possessory right to the server process having requested it, assuming that the input right is not possessed by another server process. Otherwise, if the input right is possessed by another server process, that request is deferred.

The acquisition of the input right can be confirmed, if desired, e.g. by an indication 970 indicating that the status of the input right is changed to an input right possessory status. When the input is completed, and it is desired to transfer the input right to another station, the pop-up menu 975 is opened to select a command of releasing or assigning the input right. If the input right release command is issued, the input right status indication changes to a status (970-2) in which the release has been declared. In this status, the input right is still possessed but can be transferred to another workstation if so requested by that other workdstation. When the input right disappears, the input right status indication 970 is changed to a status (970-3) indicating it. When the input right assignment command is issued, the input right is transferred to the other workstation so that the input right status indication 970 is instantly changed to a status (970-3) indicating loss of possession.

According to the third embodiment of the present invention described above, the input possessory right can be set to give a predetermined order to the accessing (e.g. inputting, changing or deleting the data) of the data on the display. If, on the other hand, another workstation does not demand the possessory right when the input possessory right is released, the possessory right can be continuously held.

Next, there will be described a fourth embodiment in which the present invention is applied to a running, monitoring or maintaining apparatus for a plant.

In an industrial plant such as a heat or atomic power plant, a rolling plant or a water supply drainage plant, a large-scale process has to be run, monitored or maintained by a plurality of operators using a plurality of image display units (e.g. CRTs, VDUs and the like).

In this plant running, monitoring or maintaining apparatus, according to the fourth embodiment, a common frame (e.g. a plant flow chart) is displayed in a plurality of displays so that the range or level of the access to the information on the frame may be discriminated by means of a running or monitoring cursor (including its control units and operators) and a maintaining cursor.

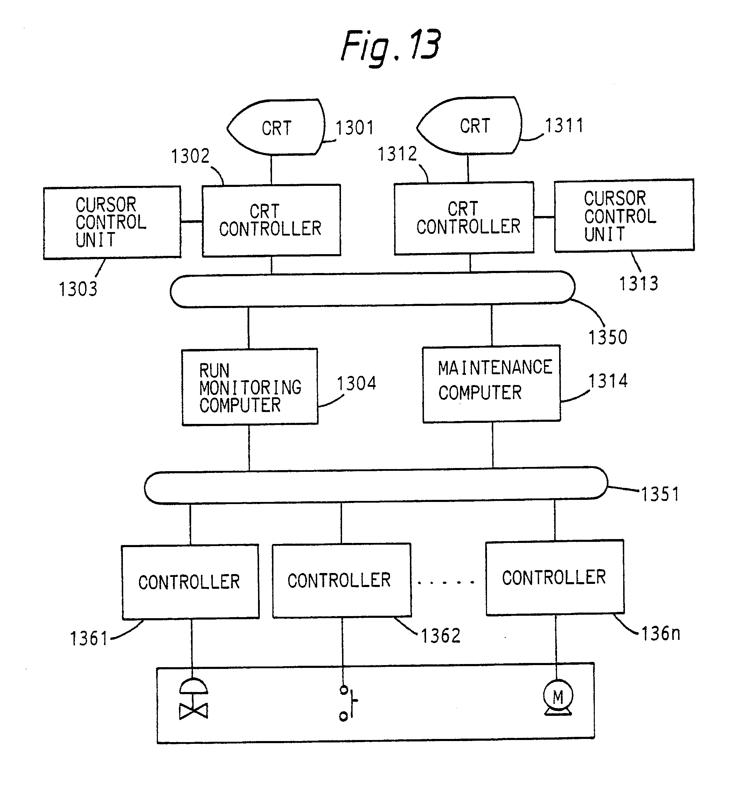

Fig. 13 shows one example of such plant running, monitoring or maintaining system for a plant 1300. In Fig. 13, there is shown a run monitoring CRT 1301 and a maintaining CRT 1311. Also shown are controllers 1302, 1312 for the respective CRTs, and cursor control units 1303, 1313 for the respective CRTs. There is also a run monitoring computer 1304, and a maintaining computer 1314. Controllers 1361, 1362 --- 136n control the respective equipment parts of the plant 1300. There is an I/O loop 1350, and a monitor controlling network 1351, so that communications are given between the CRT controller, computer and controller. The maintaining computer 1314 contains control parameter values of the controllers 1361, 1362 --- 136n.

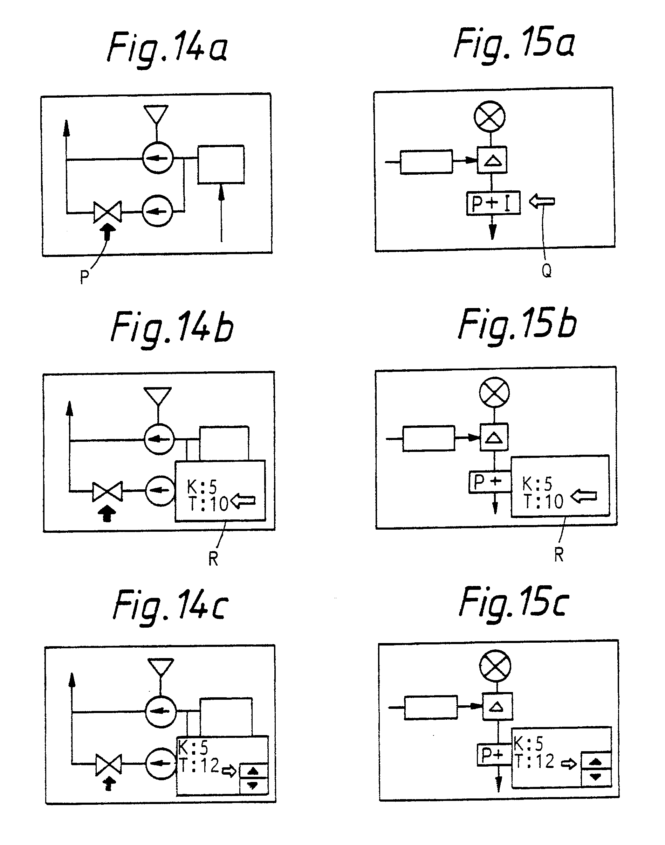

Fig. 14a to 14c show examples of the display frames of the run monitoring CRT 1301, and Figs. 15a to 15c show examples of the display frames of the maintaining CRT 1311. In Figs. 14a and 15a, show the status at an instant when the cursor (P) of the run monitoring CRT 1301 and the cursor (Q) of the maintaining CRT 1311 are arranged in the positions shown. Next, as shown in Figs. 14b and 15b, the maintaining CRT 1311 is operated so as to change the set values of the control factors (e.g., the factors for proportional integration) indicated by the cursor (Q). As a result, the window (R) indicating the present set value is opened on the two frames so that both the operators of the two CRTs can see the same information. Next, in Figs. 14c and 15c, the set value is changed by operating the maintaining cursor control unit 1313. The Figures illustrate an example in which the increasing/decreasing button displayed on the frames is operated with the cursors. The run monitoring cursors cannot have their set values changed by the aforementioned input possessory right control.

With this structure, common data can be displayed simultaneously on a plurality of CRTs so that the set value can be seen by the plurality of operators. At the same time, the change in the set values can be accomplished only from a specific cursor control unit so that the plant maintenance and management can be performed safely and properly.

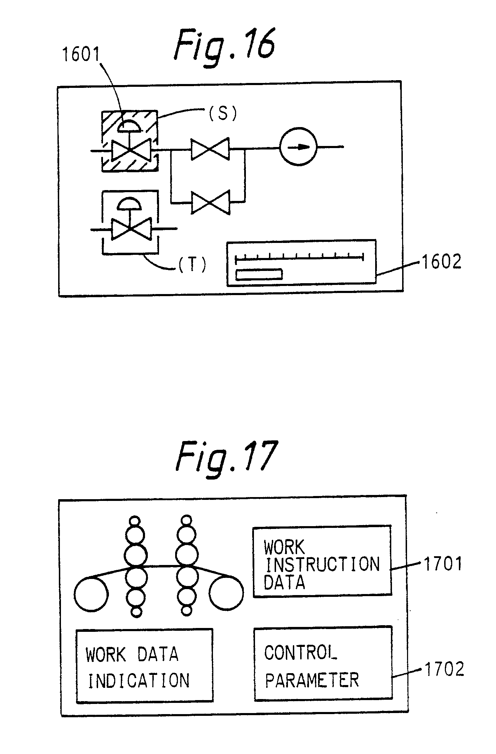

Next, a method for avoiding overlap when the selecting operations from a plurality of cursor control units are in conflict will be described. Fig. 16 shows the status in which a valve 1601 is indicated and operated by operating the cursor (5) of the two cursors (5) and (7) capable of changing the information on the frame from either of the cursor control units. Incidentally, the cursors in this case are indicated by frames entirely covering the valve 1601. At this time, the valve 1601 is discriminated from others by the cursor and is displayed to indicate that it is already subject to such indication. As a result, moreover, the same valve 1601 can be invalidated even if it is overlapped. This invalidation can be achieved by giving a flag to the data corresponding to the valve 1601, for example, to inhibit indications from another cursor due to the presence of that flag. Incidentally, Fig. 16 shows a situation on which a window 1602 indicating the degree of opening of the valve 1601 is opened by its indicating operation.

In the fourth embodiment described above, the cursor first indicated is preferred, but another standard may be used for determining the priority. For example, indications by the cursor control unit for maintaining the plant may be preferred so that the operation of the designated equipment may be locked even if the indication is not the first one. This can be achieved by giving the input right possession to the maintaining cursor. In this case, too, the maintaining cursor may be displayed for another discrimination, and visual convenience is achieved. If, moreover, an emergency occurs in the plant, the relating cursor can be given the highest priority by similar means.

In the foregoing example, the frame display is exemplified by the plant flow chart but may be modified by another display mode. In another modification, for example, the accessible range can be determined with the cursor control means by opening a plurality of windows on a display, and by displaying different data on the windows to prepare a common frame. In the common frame shown in Fig. 17, for example, a window 1701 indicating the work instruction data may be accessed only be the cursor control unit operated by the operator of the plant operation room, and a window 1702 indicating the control parameter may be accessed only by the cursor control unit of the plant maintaining operator.

Thus, according to the present invention, common data may be referred to simultaneously between display units such as workstations connected through the communication network so that a plurality of cursors may also be simultaneously displayed on the display. This enables a plurality of users to instruct and operate the data on the displays simultaneously through the network.

By providing means for controlling the input rights of a plurality of cursors, moreover, the operations of the common data may be limited to a specific cursor so that the plant can be properly run, monitored and maintained.

As was discussed earlier, the present invention originated as a development of the known X-windows system. Thus, although the present invention need not necessarily incorporate all the features of the known X-windows system, any or all such features may be incorporated into embodiments of the present invention, if desired. The modification of the embodiments of the present invention discussed above, to achieve additional features of the known X-windows system, will be readily apparent to a person skilled in the art.

## Claims

1. A computer system comprising:
at least one client processor (430,600);
a network (40) connected to said client processor; and
a plurality of workstations (10,20,30) connected to said network (40), each of said plurality of workstations (10,20,30) having a display (200,201,202), input means (210,220,230) for input of user events and a server processor (415,510,520,530) for processing said user events and generating processed user events;
characterised in that:
the server processor (415,510,520,530) of each of said plurality of workstations (10,20,30) is arranged to transmit said processed user events to said at least one client processor (430,600) via said network (40); and
said at least one client processor (430,600) is operatively connected to the server processor (415,510,520,530) of at least some of said plurality of workstations (10,20,30) for controlling said server processor (415,510,520,530) of said at least some of said plurality of workstations (10,20,30) on the basis of said user events input to the input means of at least one of said workstations (10,20,30).

2. A computer system comprising:
at least one client processor (430,600);
a network (40) connected to said client processor (430,600); and
a plurality of workstations (10,20,30) connected to said network (40), each of said plurality of workstations (10,20,30) having a display (200,201,202), input means (210,220,230) for input of user events and a server processor (415,510,520,530) for processing said user events and generating processed user events;
characterised in that:

the server processor (415,510,520,530) of each of said plurality of workstations (10,20,30) is arranged to transmit said processed user events to said at least one client processor (430,600) via said network (40); and
said at least one client processor (430,600) is operatively connected in common to the server processor (415,510,520,530) of each of said plurality of workstations (10,20,30) via said network (40) and is arranged to control each workstation (10,20,30), whereby the display (201,202,203) of all workstations (10,20,30) are controllable on the basis of a user input to the input means of any one workstation (10,20,30).

3. A computer system comprising:
at least one client processor (430,600);
a network (40) connected to said client processor (430,600); and
a plurality of workstations (10,20,30) connected to said network (40), each of said plurality of workstations (10,20,30) having a display (201,202,203), input means (210,220,230) for input of user events, and a server processor (415,510,520,530) for processing said user events and generating processed user events;
characterised in that:
the system has a first operating mode in which the server processor (415,510,520,530) of each of said plurality of workstations (10,20,30) is arranged to transmit said processed user events to said at least one client processor (430,600) via said network (40), and said at least one client processor (430,600) is operatively connected to the server processor (415,510,520,530) of at least some of said plurality of workstations (10,20,30) for controlling said server processor (415,510,520,530) of said at least some of said plurality of workstations (10,20,30) on the basis of said user events input to the input means of at least one of said workstations (10,20,30); and a second operating mode in which the server processor (415,510,520,530) of at least one of said plurality of workstations (10,20,30) is arranged to transmit said processed user events to said at least one client processor (430,600), and said at least one client processor (430,600) is arranged to control said server processor (415,510,520,530) of said one of said plurality of workstations (10,20,30).

4. A computer system according to any one of the preceding claims, wherein said at least one client processor (430,600) is located in at least one of said plurality of workstations (20,30).

5. A computer system according to claim 4, wherein said at least one client processor (430,600) and said server processor (530,520) of said at least one of said plurality of workstations (30,20) are formed by common processing means (330,320).

6. A computer system comprising:

a first workstation (20) having a display (202), input means for input of user events, a server processor (520) for processing said user events and generating processed user events of said first workstation (20), and a client processor (600) connected to said server processor (520);
at least one further workstation (10,30) having a display (200,201), input means for input of user events, and a server processor (415,510,530) for processing said user events and generating processed user events of said at least one further workstation (10,30); and
a network (40) operatively interconnecting said client processor (600) and said server processor (415,510,530) of said at least one further workstation (10,30);
characterised in that:
the server processors (520,415,510,530) of said first workstation (20) and said at least one further workstation (10,30) are each arranged to transmit corresponding processed user events to said client processor (600), and said client processor (600) is arranged to control the server processors (520,415,510,530) of said first workstation (20) and said at least one further workstation (10,30) on the basis of said user events input to the input means of said first workstation (20) or said at least one further workstation (10,30).

7. A computer system according to claim 6, wherein the server processor (520) and the client processor (600) of the first workstation (20) are formed by a common processing means (320).

8. A computer system according to any one of claims 1 to 3, having a plurality of client processors (430,600) corresponding to at least some of said plurality of workstations, each of said plurality of client processors (430,600) being located in a corresponding workstation (30,20).

9. A computer system according to claim 8 wherein each client processor (430,600) and the server processor (530,520) of the corresponding workstation (30,20) are formed by common processing means (330,320).

10. A computer system according to any one of the preceding claims, wherein each workstation has a corresponding cursor with the cursors for each workstation (10,20,30) being displayed on all of said plurality of workstations (10,20,30); and the status of the cursor of each workstation (10,20,30) together with a user event input to the input means (210,220,230) of the corresponding workstation (10,20,30) determines one of a plurality of control inputs to the client processor (430,600) from the server processor (415,510,520,530) of that corresponding workstation (10,20,30).

11. A computer system according to claim 10, wherein the client processor (430,600) is arranged to receive said control input from a selected one of said plurality of workstations (10,20,30) used to control the display (200,201,202) of each of said plurality of workstations (10,20,30) on the basis of the control inputs from said selected one of said plurality of workstations (10,20,30).

12. A computer system having:
a plurality of workstations (10,20,30), each workstation (10,20,30) including a display (200,201,202), a cursor on the display, and input means (210,220,230) for input of user events;
a processor (310,320,330) for controlling the workstations (10,20,30); and
a network interconnecting the workstations (10,20,30) and the processor (310,320,330);
wherein the status of the cursor, together with a user event, determines one of a plurality of control inputs from each workstation (10,20,30) to the processor (310,320,330);
characterised in that:
the cursor of each workstation (10,20,30) is displayed on the display (201,202,203) of all workstations (10,20,30); and
the processor (310,320,330) is arranged to receive said control inputs from a selected one of said plurality of workstations (10,20,30) used to control the display (201,202,203) of each of said plurality of workstations (10,20,30) on the basis of the control inputs from said selected one of said plurality of workstations (10,20,30).

13. A computer system according to claim 11 or claim 12 wherein the system is arranged such that the identity of said selected one of said plurality of workstations (10,20,30) is changeable amongst said plurality of workstations (10,20,30).

14. A computer system according to claim 12, wherein the client processor (430,600) is arranged to determine a priority order among said plurality of control inputs from the plurality of workstations (10,20,30) from a high priority to a low priority, and to control the display (201,202,203) of each of the workstations (10,20,30) on the basis of the control input with highest priority input to the plurality of workstations (10,20,30).

15. A computer system having:
a plurality of workstations (10,20,30), each workstation (10,20,30) including a display (201,202,203), a cursor on the display (201,202,203), and input means (210,220,230) for input of user events;
a processor (314,320,330) for controlling the workstations (10,20,30); and
a network (40) interconnecting the workstations (10,20,30) and the processor (310,320,330);
wherein the status of the cursor, together with a user event, determines one of a plurality of control inputs from each workstation (10,20,30) to the processor (310,320,330);
characterised in that:
the cursors of each workstation (10,20,30) are displayed on the display (201,202,203) of all workstations (10,20,30); and
the processor (310,320,330) is arranged to determine a priority order among said plurality of control inputs from the plurality of workstations (10,20,30) from a high priority to a low priority, and to control the display (201,202,203) of each of the workstations (10,20,30) on the basis of the control input with highest priority input to the processor (310,320,330).

16. A computer system according to claim 14 or claim 15, wherein said priority order is determined on the basis of the time order of said plurality of control input from the plurality of workstations (10,20,30), with the control input earliest in time order having the highest priority order.

17. A computer system according to claim 14 or claim 15, wherein the client processor is arranged to act on all of said plurality of control inputs from a workstation (10,20,30) with a high priority, and the client processor is arranged to act on only some of said plurality of control inputs from a workstation (10,20,30) with a low priority.

18. A computer system having:
a plurality of workstations (10,20,30), each workstation (10,20,30) including a display (201,202,203), a cursor on the display, and input means (210,220,230) for input of user events;
a processor (310,320,330) for controlling the workstations (10,20,30); and
a network (40) interconnecting the workstations (10,20,30) and the processor (310,320,330);
wherein the status of the cursor, together with a user event, determines one of a plurality of control inputs from each workstation (10,20,30) to the processor (310,320,330);
characterised in that:
the cursors of each workstation (10,20,30) are displayed on the display of all workstations (10,20,30); and
the processor (310,320,330) is arranged to determine a priority order among said workstations (10,20,30) from a high priority to a low priority, the processor (310,320,330) is arranged to act on all of said plurality of control inputs from a workstation (10,20,30) with a high priority, and the processor (310,320,330) is arranged to act on only some of said plurality of control inputs from a workstation (10,20,30) with a low priority.

19. A computer system according to any one of claims 10 to 18, wherein the system has a first operating mode in which the cursor of each workstation (10,20,30) is displayed on the display of all workstations (10,20,30), and the display (201,202,203) of each workstation (10,20,30) is controlled on the basis of a control input from any one of said workstations (10,20,30); and the system has a second operating mode in which each workstation (10,20,30) displays its own cursor, and the display of each workstation (10,20,30) is controlled on the basis of its corresponding control input.

20. A computer system having:
a plurality of workstations (10,20,30), each workstation (10,20,30) including a display (201,202,203), a cursor on the display (201,202,203), and input means (210,220,230) for input of user events;
a processor (310,320,330) for controlling the workstations (10,20,30); and
a network (40) interconnecting the workstations (10,20,30) and the processor;
wherein the status of the cursor, together with a user event, determines one of a plurality of control inputs from each workstation (10,20,30) to the processor (310,320,330);
characterised in that:
the system has a first operating mode in which the cursor of each workstation (10,20,30) is displayed on the display (201,202,203) of all workstations (10,20,30), and the display (201,202,203) of each workstation (10,20,30) is controlled on the basis of a control input from any one of said workstations (10,20,30);
the system has a second operating mode in which each workstation (10,20,30) displays its own cursor, and the display of each workstation (10,20,30) is controlled on the basis of its corresponding control input.

21. A computer system according to any one of claims 10 to 20 wherein the status of each cursor is determined by its location on the display of the corresponding workstation (10,20,30).

22. A computer system according to any one of claims 10 to 20 wherein the status of each cursor is determined by selection of one of a plurality of cursor types on the display of the corresponding workstation (10,20,30).

23. A computer system according to any one of the preceding claims, wherein said display (200,201,202) of each of said plurality of workstations has at least one window (445,450,455,460).

24. A computer system according to claim 23 wherein the windows (950,855,850) of each of said plurality of workstations (10,20,30) are identical.

25. A computer system according to claim 25 wherein there are a plurality of said windows (450,455,460), each corresponding to one of the plurality of workstations (10,20,30).

26. A method of operating a computer system, the system comprising a plurality of workstations (10,20,30), each workstation (10,20,30) having a display (201,202,203), input means (210,220,230) for input of user events, and a server processor (415,510,520,530) for processing said user events and for controlling said display (201,202,203); at least one client processor (430,600); and a network (40) interlinking the workstations (10,20,30) and the at least one client processor (430,600);
characterised in that:
the method comprises transmitting processed user events from the server processor (415,510,520,530) of each workstation (10,20,30) to the at least one client processor (430,600); and
controlling the server processor (415,510,520,530) of at least some of the workstations (10,20,30) by means of the at least one client processor (430,600) on the basis of user events input to the input means of at least one of the workstations (10,20,30).

27. A method of operating a computer system, the system comprising a plurality of workstations (10,20,30), each workstation (10,20,30) having a display (201,202,203), input means (210,220,230) for input of user events, and a server processor (415,510,520,530) for processing said user events and for controlling said display (201,202,203); at least one client processor (430,600); and a network (40) interlinking the workstations (10,20,30) and the at least one client processor (430,600);
characterised in that:
the method comprises controlling the display of each workstation (10,20,30) by use of the client processor (430,600) on the basis of a user input to the input means (210,220,230) of any one of the plurality of workstations (10,20,30).

28. A method of operating a computer system, the computer system comprising:
a first workstation (20) having a display (202), input means for input of user events, a server processor (520) for processing said user events and generating processed user events of said first workstation (20), and a client processor (600) connected to said server processor (520);
at least one further workstation (10,30) having a display (201,203), input means for input of user events, and a server processor (415,510,530) for processing said user events and generating processed user events of said at least one further workstation (10,30); and
a network (40) operatively interconnecting said client processor (600) and said server processor (415,510,530) of said at least one further workstation (10,30);
characterised in that:
the method comprises transmitting processed user events from the server processors (415,510,520,530) of said first workstation (20) and said at least one further workstation (10,30) to said client processor (600); and
controlling the server processors (415,510,520,530) of said first workstation (20) and said at least one further workstation (10,30) by the client processor (600) on the basis of said user events input to the input means of said first workstation (20) or said at least one further workstation (10,30).

29. A method of operating a computer system, which system comprises:

at least one client processor (430,600);

a network (40) connected to said client processor; and

a plurality of workstations (10,20,30) connected to said network (40), each of said plurality of workstations (10,20,30) having a display (201,202,203), input means (210,220,230) for input of user events and a server processor (415,510,520,530) for processing said user events and generating processed user events:

characterised in that:

the method comprises operating the system in a first operating mode, in which the server processor (415,510,520,530) of each of said plurality of workstations (10,20,30) transmits said processed user events to said at least one client processor (430,600) via said network (40), and said at least one client processor (430,600) controls the server processor (415,510,520,530) of at least some of the plurality of workstations (10,20,30) on the basis of said user events input to the input means of at least one of said workstations (10,20,30);

changing the system to a second operating mode; and

operating the system in said second operating mode, in which the server processor (415,510,520,530) of at least one of said plurality of workstations (10,20,30) transmits said processed user events to said at least one client processor (430,600), and said at least one client processor (430,600) controls said server processor (415,510,520,530) of said one of said plurality of workstations (10,20,30).

30. A display system comprising a computer system according to any one of claims 1 to 25 and means for inputting information to said input means of each of said workstations;

whereby said information is processable by said server processors of said workstations and said at least one client processor, and displayable on said displays of at least one of said plurality of workstations.

31. An industrial plant comprising a plurality of plant components; means for determining characteristics of said plant components; and a display system according to claim 30 for displaying said characteristics of said plant components;

whereby said plant characteristics are processable by said server processors of said workstations and said at least one client processor, and displayable on said displays of at least one of said plurality of workstations.

## Fig.1

WORK STATION 1 _10_

WORK STATION 2 _20_

WORK STATION 3 _30_

40 LOCAL AREA NETWORK

## Fig.2

_100_

| MPU _110_ | DISPLAY MEMORY _140_ | _170_ |

MAIN MEMORY _120_

DRAWING PROCESSOR _150_

I/O IF _130_

NETWORK CONTROL PROCESSOR _160_

DISPLAY UNIT _200_

220

210 MOUSE

230 KEYBOARD

240 EXTERNAL MEMORY

NETWORK 40

14

# Fig.3

40 NETWORK

Fig.4

# Fig. 5

| (1) USER OPERATION |
| --- |
| MOVE THE MOUSE IN THE WINDOW |

| (2) SERVER PROCESSING |
| --- |
| CHECK THE MODE FLAG (710) TO INFORM THE CLIENT PROCESS (600) OF THE MOVEMENT OF THE MOUSE IF IN THE GLOBAL MODE |

| (3) CLIENT PROCESSING |
| --- |
| INFORM ALL THE PROCESSES (510,520 AND 530) SHARING THE CLIENT PROCESS (600), OF THE MOVEMENT CURSOR ASSIGNED TO THE WORK STATION (10) |

| (4) CLIENT PROCESSING |
| --- |
| EACH SERVER PROCESS (510,520 OR 530) HAVING BEEN INFORMED OF THE MOVEMENT OF THE CURSOR FROM THE CLIENT PROCESS (600) UPDATES THE CURSOR INDICATION POSITION OF THE WORK STATION (10) |

# Fig.6a

FRAME OF THE WORK STATION 10
BEFORE THE MOUSE OPERATION

450

# Fig.6b

FRAME OF THE WORK STATION 10
AFTER THE MOUSE MOVEMENT

450

# Fig.6c

FRAME OF THE WORK STATION 20
AFTER THE MOUSE MOVEMENT

460

MOVE LEFTWARD THE MOUSE (i.e.,
CORRESPONDING CURSOR: 🖐 ) OF
THE WORK STATION 10

# Fig 6d

FRAME OF THE WORK STATION 30
AFTER THE MOUSE MOVEMENT

455

🖐   CURSOR OF WORK STATION 10

☺   CURSOR OF WORK STATION 20

➤   CURSOR OF WORK STATION 30

*Fig.7*

600

680 — | APPLICATION PROGRAM BODY |

670 — | TOOL LIBRARY |

660 — SERVER INTERFACE MANAGER

650

CURSOR RESOURCE

610 — | SI | | SI | | SI |

640 — | NETWORK INTERFACE |

# Fig.8

350

DISPLAY MANAGER

510    514    510    510

511 — WINDOW DRAWING PROCESS

512 — CLIENT INTERFACE    CURSOR CONTROL    SERVER PROCESS    SERVER PROCESS

513 — NETWORK INTERFACE

40 — LOCAL AREA NETWORK

600    600    600

CLIENT PROCESS    CLIENT PROCESS    CLIENT PROCESS

# Fig. 9

USER AND SERVER PROCESSES     CLIENT PROCESS

CONNECTION DEMAND (A)

CONNECTION PERMISSION (B)

CURSOR SELECTION REQUEST (C)

CURSOR SELECTION RESULT NOTIFICATION (D)

CONTROL MODE SETTING REQUEST (E)

MODE SETTING RESULT NOTIFICATION (F)

START NOTICE

USER ACTION

RESPONSE OF CLIENT

USER ACTION

RESPONSE OF CLIENT

MODE CHANGE REQUEST

MODE SETTING REQUEST

MODE SETTING RESULT NOTIFICATION

END DEMAND

DISCONNECTION

## Fig. 10

*Fig. 11*

STATUS INDICATION OF
INPUT POSSESSORY
RIGHT 970

## Fig.12

DISPLAY
UNIT 200

INPUT RIGHT
DEMAND

INPUT RIGHT
RELEASE

INPUT RIGHT
ASSIGNMENT

WINDOW 950

POP-UP MENU 975

970-1 INPUT RIGHT POSSESSORY STATUS

970-2 INPUT RIGHT POSSESSORY STATUS
(RELEASE DECLARED)

970-3 STATUS OF NO INPUT RIGHT
POSSESSION

# Fig.13

# Fig.14a

P

# Fig. 15a

Q

# Fig.14b

K:5
T:10

R

# Fig.15b

P +
K:5
T:10

R

# Fig.14c

K:5
T:12

# Fig.15c

P+
K:5
T:12

## Fig.16

## Fig.17